# EUROPEAN PATENT APPLICATION

(11) **EP 4 231 751 A1**
(43) Date of publication of application: **23.08.2023**
(21) Application number: 21899949.8
(22) Date of filing: 26.11.2021
(51) Int. Cl.: H04W 72/08

(54) **WIRELESS COMMUNICATION METHOD, DEVICE, AND SYSTEM**

(30) Priority: 03.12.2020 CN 202011407167
(71) Applicant: Huawei Technologies Co., Ltd., Shenzhen, Guangdong 518129 (CN)
(72) Inventor: QIAO, Yunfei, Shenzhen, Guangdong 518129 (CN); WANG, Xiaolu, Shenzhen, Guangdong 518129 (CN); WANG, Yu, Shenzhen, Guangdong 518129 (CN); WANG, Jun, Shenzhen, Guangdong 518129 (CN)
(74) Representative: Gill Jennings & Every LLP
(86) International application number: PCT/CN2021/133601
(87) International publication number: WO 2022/116917

(57) **Abstract**

This application discloses a wireless communication method, apparatus, and system, applied to a wireless communication network. The wireless communication network includes at least two access nodes. The method includes: A first access node obtains a first communication resource corresponding to a first terminal device, where the first communication resource is used to provide a network function service for the first terminal device; the first access node generates a first record based on the first communication resource; and the first access node sends the first record to another access node in the wireless communication network. According to this method, the first record including the first communication resource is sent to another access node in an access network instead of a core network element of a terrestrial station. A distance between the first access node and the another access node in the radio access network is shorter than a distance to the terrestrial core network element. Therefore, transmission overheads can be effectively reduced, and a transmission latency can be effectively shortened, so that wireless communication efficiency is improved.

## Description

This application claims priority to Chinese Patent Application No. 202011407167.1, filed with the China National Intellectual Property Administration on December 3, 2020 and entitled "WIRELESS COMMUNICATION METHOD, APPARATUS, AND SYSTEM", which is incorporated herein by reference in its entirety.

### TECHNICAL FIELD

This application relates to the communication field, and in particular, to a wireless communication method, apparatus, and system.

### BACKGROUND

With development of information technologies, more urgent requirements are imposed on communication efficiency, mobility, diversity, and the like. Currently, in some important fields, for example, in various communication scenarios such as space communication, aeronautical communication, and military communication, satellites play an important role. Satellite communication has features such as a long communication distance, a large coverage area, and flexible networking. A satellite can provide a service for a fixed terminal, and can provide a service for various mobile terminals.

In an actual environment, there is a scenario in which a base station cannot be deployed, for example, a sea area, a desert, or a high altitude. Therefore, a conventional terrestrial network cannot provide seamless coverage for customers. To overcome this defect, a non-terrestrial network (Non terrestrial networks, NTN) is introduced in a 5th generation (5th Generation, 5G) system. In the non-terrestrial network, a base station or some functions of a base station are deployed on a high-altitude platform or a satellite, to achieve seamless full network coverage by using features of satellite communication.

In a scenario in which a base station is deployed on a high-altitude platform or a satellite, a series of scheduling and authentication operations need to be performed for device sharing between an access network and a core network. Due to a latency of transmission between the satellite and the ground, if the foregoing operations are all completed on the ground, signaling related to scheduling and authentication needs to be transmitted between the space and the ground back and forth, causing a high latency and high transmission overheads.

### SUMMARY

Embodiments of this application provide a wireless communication method, to reduce a transmission latency and overheads in NTN communication transmission. Specifically, this application discloses the following technical solutions.

According to a first aspect, this application provides a wireless communication method. The method may be applied to a wireless communication network, the wireless communication network includes at least two access nodes, and the method includes: A first access node obtains a first communication resource corresponding to a first terminal device, where the first communication resource is used to provide a network function service for the first terminal device; and the first access node generates a first record based on the first communication resource, and sends the first record to another access node in the wireless communication network.

According to the method provided in this aspect, an access node in the radio access network, for example, the first access node, is selected. After a communication resource required by a user is determined, a record is generated based on the communication resource, and then sent to another access node in the access network instead of a core network element of a terrestrial station. Because a distance between the first access node and the another access node in the radio access network is shorter than a distance to the terrestrial core network element, after the first record is sent to the another access node, a service response speed of processing and feedback performed by the another access node is higher, and a transmission latency is reduced. Therefore, this method can effectively reduce a transmission latency and overheads, so that wireless communication efficiency is improved.

The first record includes user information, the first communication resource, and time information. Specifically, the user information is used to determine a user identity or related information of a terminal device at a request sending end. The first communication resource may be used to provide a required resource for a requesting terminal device. The time information is used to identify a use period of the current first communication resource, and further includes a timestamp at which the first record is generated, and the like.

With reference to the first aspect, in a possible implementation of the first aspect, the another access node in the wireless communication network includes a second access node, and the method further includes: The first access node receives a first record set sent by the second access node, where the first record set is generated based on the first record and a record of the another access node; and the first access node generates a local record based on the first record set.

Optionally, the first communication resource includes at least one of the following:
a time domain resource, a frequency domain resource, a code resource, a beam resource, and a polarization resource;
an access network slice parameter, a core network slice parameter, and a data network slice parameter; and
a precoding matrix, a network parameter for obtaining an MCS, and the like.

With reference to the first aspect, in another possible implementation of the first aspect, when the first communication resource includes at least one of the time domain resource, the frequency domain resource, the code resource, the beam resource, and the polarization resource, the first record is used by an access node in the wireless communication network to charge a user accessing the wireless communication network, so as to implement a charging function and resolve a charging problem in a spectrum or satellite hardware resource scenario.

With reference to the first aspect, in another possible implementation of the first aspect, when the first communication resource includes the access network slice parameter, the core network slice parameter, and the data network slice parameter, the first record is used by an access node in the wireless communication network to allocate a slice resource to a terminal device accessing the wireless communication network. In this implementation, when a user accesses a non-home operator network, an access node (or a satellite node) may complete orchestration of a user network slice based on a local record, thereby reducing signaling overheads and reducing a transmission latency.

With reference to the first aspect, in another possible implementation of the first aspect, when the first communication resource includes the precoding matrix and/or the network parameter for obtaining the MCS, the first record is used by an access node in the wireless communication network to allocate at least one of a time-frequency resource and a modulation and coding parameter to a terminal device accessing the wireless communication network. In this implementation, an air interface parameter of a user is configured based on the precoding matrix and/or the network parameter for the MCS. Compared with configuring and transmitting an air interface parameter by using a terrestrial core network, this implementation reduces signaling overheads and reduces a transmission latency.

With reference to the first aspect, in another possible implementation of the first aspect, that the first access node sends the first record to another access node in the wireless communication network includes: The first access node encrypts the first record, and sends an encrypted first record to the another access node in the wireless communication network. In this implementation, a record is first encrypted by using an asymmetric encryption algorithm, and then transmitted, so that transmission security can be ensured, and the record is prevented from being stolen or changed.

It should be noted that the method in the implementations of this aspect may be applied to a blockchain technology. For example, the first access node broadcasts the first record to another node in a blockchain, and reaches a consensus with the another node. After a smart contract is generated, a local record including the first record is used as a block, and is persistently stored in the blockchain, to provide a service response for a subsequent service request of a terminal device.

According to a second aspect, this application further provides a wireless communication method. The method may be applied to a wireless communication network, the wireless communication network includes at least two access nodes, and the method includes: A second access node receives at least one record sent by another access node in the wireless communication network, where the at least one record includes a first record sent by a first access node, the first record is generated based on a first communication resource, and the first communication resource is used to provide a network function service for a first terminal device; and determines a first record set in a first time period based on the at least one record.

With reference to the second aspect, in a possible implementation of the second aspect, the method further includes: The second access node sends the first record set to the first access node and the another access node.

The first record includes user information, the first communication resource, and time information.

Optionally, the first communication resource includes at least one of the following:
a time domain resource, a frequency domain resource, a code resource, a beam resource, and a polarization resource;
an access network slice parameter, a core network slice parameter, and a data network slice parameter; and
a precoding matrix, and a network parameter for obtaining an MCS.

Further, when the first communication resource includes at least one of the time domain resource, the frequency domain resource, the code resource, the beam resource, and the polarization resource, the record set is used by an access node in the wireless communication network to charge a user accessing the wireless communication network.

When the first communication resource includes at least one of the access network slice parameter, the core network slice parameter, and the data network slice parameter, the first record is used by an access node in the wireless communication network to allocate a slice resource to a terminal device accessing the wireless communication network.

When the first communication resource includes the precoding matrix and/or the network parameter for obtaining the MCS, the first record is used by an access node in the wireless communication network to allocate a time-frequency resource and/or a modulation and coding parameter to a terminal device accessing the wireless communication network.

With reference to the second aspect, in another possible implementation of the second aspect, the at least one record includes an encrypted first record; and that the second access node determines a first record set in a first time period based on the at least one record includes: The second access node decrypts the encrypted first record and a record encrypted by the another access node; and the second access node determines the first record set based on a decrypted first record and a decrypted record of the another access node.

With reference to the second aspect, in another possible implementation of the second aspect, that a second access node receives at least one record sent by another access node includes: The second access node receives the at least one record from the another access node that is forwarded by a third node, where the third node is a node in the wireless communication network.

According to a third aspect, this application provides a wireless communication apparatus. The apparatus is a first access node in a wireless communication network, the wireless communication network further includes another access node, and the apparatus includes: an obtaining unit, configured to obtain a first communication resource corresponding to a first terminal device, where the first communication resource is used to provide a network function service for the first terminal device; a processing unit, configured to generate a first record based on the first communication resource; and a sending unit, configured to send the first record to the another access node in the wireless communication network.

The first record includes user information, the first communication resource, and time information.

With reference to the third aspect, in a possible implementation of the third aspect, the another access node in the wireless communication network includes a second access node, and the apparatus further includes: a receiving unit, configured to receive a first record set sent by the second access node, where the first record set is generated based on the first record and a record of the another access node. The processing unit is further configured to generate a local record based on the first record set.

The first communication resource includes at least one of the following:
a time domain resource, a frequency domain resource, a code resource, a beam resource, and a polarization resource;
an access network slice parameter, a core network slice parameter, and a data network slice parameter; and
a precoding matrix, and a network parameter for obtaining an MCS.

Further, when the first communication resource includes at least one of the time domain resource, the frequency domain resource, the code resource, the beam resource, and the polarization resource, the record set is used by an access node in the wireless communication network to charge a user accessing the wireless communication network.

When the first communication resource includes at least one of the access network slice parameter, the core network slice parameter, and the data network slice parameter, the first record is used by an access node in the wireless communication network to allocate a slice resource to a terminal device accessing the wireless communication network.

When the first communication resource includes the precoding matrix and/or the network parameter for obtaining the MCS, the first record is used by an access node in the wireless communication network to allocate a time-frequency resource and/or a modulation and coding parameter to a terminal device accessing the wireless communication network.

With reference to the third aspect, in another possible implementation of the third aspect, the processing unit is specifically configured to encrypt the first record; and the sending unit is specifically configured to send an encrypted first record to the second access node and the another access node.

According to a fourth aspect, this application further provides a record management apparatus. The apparatus is a second access node in a wireless communication network, the wireless communication network further includes another access node, and the apparatus includes: a receiving unit, configured to receive at least one record sent by the another access node, where the at least one record includes a first record sent by a first access node, the first record is generated based on a first communication resource, and the first communication resource is used to provide a network function service for a first terminal device; and a processing unit, configured to determine a first record set in a first time period based on the at least one record.

With reference to the fourth aspect, in a possible implementation of the fourth aspect, the apparatus further includes a sending unit, configured to send the first record set to the first access node and the another access node.

The first record includes user information, the first communication resource, and time information.

In addition, the first communication resource includes at least one of the following:
a time domain resource, a frequency domain resource, a code resource, a beam resource, and a polarization resource;
an access network slice parameter, a core network slice parameter, and a data network slice parameter; and
a precoding matrix, and a network parameter for obtaining an MCS.

Further, when the first communication resource includes at least one of the time domain resource, the frequency domain resource, the code resource, the beam resource, and the polarization resource, the record set is used by an access node in the wireless communication network to charge a user accessing the wireless communication network.

When the first communication resource includes at least one of the access network slice parameter, the core network slice parameter, and the data network slice parameter, the first record is used by an access node in the wireless communication network to allocate a slice resource to a terminal device accessing the wireless communication network.

When the first communication resource includes the precoding matrix and/or the network parameter for obtaining the MCS, the first record is used by an access node in the wireless communication network to allocate a time-frequency resource and/or a modulation and coding parameter to a terminal device accessing the wireless communication network.

With reference to the fourth aspect, in another possible implementation of the fourth aspect, the at least one record includes an encrypted first record; and the processing unit is further configured to decrypt the encrypted first record and a record encrypted by the another access node; and determine the first record set based on a decrypted first record and a decrypted record of the another access node.

With reference to the fourth aspect, in another possible implementation of the fourth aspect, the receiving unit is further configured to receive the at least one record from the another access node that is forwarded by a third node, where the third node is a node in the wireless communication network.

According to a fifth aspect, this application further provides a record management system, applied to a wireless communication network. The system includes a first access node, a second access node, and another access node. The first access node is configured to obtain a first communication resource corresponding to a first terminal device, generate a first record based on the first communication resource, and send the first record to the second access node and the another access node, where the first communication resource is used to provide a network function service for the first terminal device. The second access node is configured to receive the first record and a record sent by the another access node, and determine a first record set in a first time period based on the first record and the record sent by the another access node.

The first record includes user information, the first communication resource, and time information.

In addition, the first communication resource includes at least one of the following: a time domain resource, a frequency domain resource, a code resource, a beam resource, and a polarization resource; an access network slice parameter, a core network slice parameter, and a data network slice parameter; and a precoding matrix, and a network parameter for obtaining an MCS.

With reference to the fifth aspect, in a possible implementation of the fifth aspect, the second access node is further configured to send the first record set to the first access node and the another access node.

With reference to the fifth aspect, in another possible implementation of the fifth aspect, the first access node is further configured to receive the first record set and a record that is from the another access node, and generate a local record based on the first record set and the record of the another access node.

With reference to the fifth aspect, in another possible implementation of the fifth aspect, when the first record is a first record encrypted by the first access node, the second access node is further configured to decrypt the encrypted first record; and determine the first record set based on a decrypted first record and the record of the another access node.

With reference to the fifth aspect, in another possible implementation of the fifth aspect, the system further includes the first terminal device; the first terminal device is configured to send a first service request to any access node in the system after the local record is generated; an access node receiving the first service request is configured to obtain, based on a local transaction record, a first service response corresponding to the first request service, and send the first service response to the first terminal device; and the first terminal device is further configured to receive the first service response.

According to a sixth aspect, this application further provides a network device or a network node. The network device or the network node may be an access node in a wireless communication network, and includes a processor and a memory. The processor is coupled to the memory.

The memory is configured to store computer program instructions, and the processor is configured to execute the instructions stored in the memory, so that the terminal device performs the method according to the first aspect and the implementations of the first aspect, or performs the method according to the second aspect and the implementations of the second aspect.

Optionally, the processor and the memory may be integrated into a chip system. The chip system further includes an input/output interface, and the input/output interface is configured to implement communication between the chip system and another external module.

Optionally, the processor is a logic circuit.

Optionally, the network device or the network node is a first access node, a second access node, or another satellite node.

According to a seventh aspect, this application further provides a computer-readable storage medium. The storage medium stores instructions, so that when the instructions are run on a computer or a processor, the instructions may be used to perform the method according to the first aspect and the implementations of the first aspect, or perform the method according to the second aspect and the implementations of the second aspect.

In addition, this application further provides a computer program product. The computer program product includes computer instructions. When the instructions are executed by a computer or a processor, the method according to the first aspect and the implementations of the first aspect and the method according to the second aspect and the implementations of the second aspect may be implemented.

It should be noted that beneficial effects corresponding to the technical solutions in the implementations of the second aspect to the seventh aspect are the same as beneficial effects of the first aspect and the implementations of the first aspect. For details, refer to the beneficial effect descriptions in the first aspect and the implementations of the first aspect. Details are not described again.

### BRIEF DESCRIPTION OF DRAWINGS

FIG. 1 is a schematic diagram of a structure of a satellite communication system according to an embodiment of this application;
FIG. 2 is a flowchart of a wireless communication method according to an embodiment of this application;
FIG. 3 is a flowchart of another wireless communication method according to an embodiment of this application;
FIG. 4A and FIG. 4B are a schematic diagram of completing a block consensus based on a blockchain according to an embodiment of this application;
FIG. 5 is a signaling flowchart of a wireless communication method according to an embodiment of this application;
FIG. 6 is a schematic diagram of a structure of a wireless communication apparatus according to an embodiment of this application;
FIG. 7 is a schematic diagram of a structure of a wireless communication system according to an embodiment of this application; and
FIG. 8 is a schematic diagram of a structure of another wireless communication apparatus according to an embodiment of this application.

### DESCRIPTION OF EMBODIMENTS

The following describes technical solutions in embodiments of this application in detail with reference to the accompanying drawings.

The technical solutions in embodiments of this application are applied to a wireless communication network. The wireless communication network has features such as distributed storage and a consensus mechanism. These features can be used to improve transmission performance and quality of service (quality of service, QoS) of the wireless communication network.

The wireless communication network includes a plurality of network nodes, and peer-to-peer (peer-to-peer, P2P) transmission is supported between the network nodes. In addition, different nodes can reach a consensus mechanism, support functions such as distributed data storage and cryptography principle integration, and have technical features of full disclosure and anti-tampering.

For example, a blockchain technology may be applied to the wireless communication network. Each node has a complete blockchain, and a breakdown of any one or more network nodes does not cause a loss of blockchain data, so that the blockchain data is highly secure.

A smart contract is a program that is driven by an event, runs on each ledger in each network node of distributed storage, and can manage data in the ledger. The smart contract is usually represented as a computing program. A transaction rule and transaction logic are specified in computer code of the smart contract. When a user invokes the smart contract, the smart contract is executed when a transaction condition is met, and a transaction result obtained after execution is written into a ledger.

Asymmetric encryption is to encrypt data by using a "key pair". The key pair includes one public key (public key) and one private key (private key). The public key and the private key form one unique key pair according to an algorithm. The public key is a part that can be disclosed in the key pair, and the private key is a part that cannot be disclosed. Usually, the public key is used to encrypt a session key and verify a digital signature, or encrypt data that can be decrypted by using the corresponding private key. The private key is used for decryption. When the key pair is used, if the public key is used to encrypt a piece of data, the private key is required for decryption. On the contrary, if the private key is used to encrypt data, the public key is required to decrypt encrypted data. If only one of the keys is obtained, original data cannot be obtained through decryption. This improves transmission security.

The technical solutions of this application pertain to the field of wireless communication, and may be applied to a non-terrestrial network (non-terrestrial network, NTN) system such as a satellite communication system or a high altitude platform station (high altitude platform station, HAPS) communication system. The satellite communication system may be integrated with a conventional mobile communication system. For example, the mobile communication system may be a 4th generation (4th generation, 4G) communication system such as a long term evolution (long term evolution, LTE) system, a 5th generation (5th generation, 5G) communication system such as a new radio (new radio, NR) system, or a future mobile communication system. Members of the 3rd generation partnership project (3rd Generation Partnership Project, 3GPP) integrate satellite communication and 5G technologies. A terrestrial mobile terminal and user equipment (user equipment, UE) access a network through new radio. A base station is deployed on a satellite or a high-altitude platform, and is connected to a terrestrial core network (core network) through a radio link.

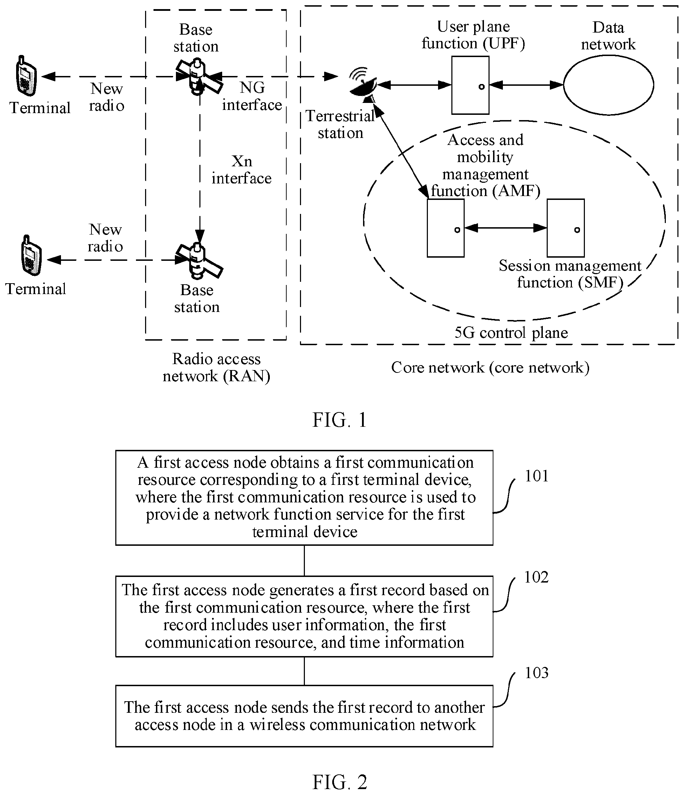

Specifically, FIG. 1 is a schematic diagram of a structure of a satellite communication system. The system includes at least one terminal, a radio access network (radio access network, RAN), and a core network. The radio access network includes at least one access node. The access node may be a base station or a module having a base station function. In this embodiment, the access node in the radio access network is disposed on a high-altitude platform or a satellite, so that an NTN is integrated into the radio access network. Each terminal and an access node may communicate with each other through NR, and access nodes may communicate with each other through an Xn interface.

The core network includes a terrestrial station and a core network element. The core network element includes a user plane function (user plane function, UPF) unit, a control plane function unit such as an access and mobility management function (access and mobility management function, AMF) unit and a session management function (session management function, SMF) unit, and a data network. It should be understood that the core network further includes another network element, for example, a charging function (charging function, CHF) unit, a unified data management (unified data management, UDM) unit, a policy control function (policy control function, PCF) unit, or a network slice selection function (network slice selection function, NSSF) unit.

The UPF unit may perform specific data forwarding on a user plane, generate a phone bill based on a traffic status, and the like. On a control plane, the AMF unit inherits functions of mobility management, registration management, and connection management in a mobility management entity (mobility management entity, MME). The SMF unit is configured to perform session management functions such as UE IP address allocation, UPF selection, charging and QoS policy control, and the like. The CHF unit is responsible for a charging-related function, for example, delivering a charging policy, collecting charging information, and generating a charging bill. The UDM unit is configured to manage user subscription data and generate an authentication parameter. The PCF unit is configured to manage a charging policy and a QoS policy. The NSSF unit is configured to select a network slice.

In addition, the base station in the RAN may be connected to the terrestrial core network through an NG interface. For example, the base station transmits data to the terrestrial station through the NG interface, and then the terrestrial station forwards the data to the user plane function unit or the control plane function unit.

The terminal, also referred to as a terminal device, includes but is not limited to a mobile phone, a notebook computer, a tablet computer, a personal computer (personal computer, PC), a personal digital assistant (personal digital assistant, PDA), a foldable terminal, a vehicle-mounted terminal, a wearable device (for example, a smartwatch or a band) with a wireless communication function, user equipment (user equipment, UE), an augmented reality (augmented reality, AR) or virtual reality (virtual reality, VR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A specific device form of the terminal device is not limited in embodiments of this application. In addition, the foregoing various terminal devices carry iOS (IOS), Android (Android), Microsoft (Microsoft), or another operating system.

The access node may be an evolved NodeB (evolutional Node B, eNB or eNodeB) in LTE, or a gNodeB (for example, an ngNB), a broadband network gateway (broadband network gateway, BNG), an aggregation switch, or a non-3GPP access device in a 5G network. This is not specifically limited in embodiments of this application. Optionally, the base station in embodiments of this application may include various forms of base stations, for example, a macro base station, a micro base station (also referred to as a small cell), a relay station, an access point, a next-generation NodeB (gNodeB, gNB), a transmitting and receiving point (transmitting and receiving point, TRP), a transmitting point (transmitting point, TP), a mobile switching center, and a device having a function of a base station in device-to-device (device-to-device, D2D), vehicle-to-everything (vehicle-to-everything, V2X), or machine-to-machine (machine-to-machine, M2M) communication. This is not specifically limited in embodiments of this application.

In the satellite communication system shown in FIG. 1, when a satellite node (a base station) transmits downlink data to a terminal device, the satellite node first performs channel coding on to-be-transmitted data, performs constellation modulation on the data after the channel coding to generate downlink data, and then sends the downlink data to each terminal device. Similarly, when a terminal device transmits uplink data to a satellite node, the terminal device first encodes data through channel coding, then performs constellation modulation on encoded data, and transmits obtained data to the satellite node.

In the conventional technology, a series of operations such as user authentication, charging, and scheduling are completed in a terrestrial core network. In an NTN scenario, related signaling needs to be exchanged between the space and the ground back and forth a plurality of times, causing a high latency and high transmission overheads.

For the foregoing problem, in embodiments of this application, communication resources are allocated in a wireless communication system including a plurality of satellite nodes, each satellite node is run and maintained on a decentralized platform, and information such as user access authentication, location management, charging, authentication, and slice management is recorded on the platform, so that data exchange and sharing are implemented, and frequency of interaction between an air network element and a terrestrial network element is reduced.

The following describes the technical solutions in embodiments of this application in detail.

An embodiment of this application provides a wireless communication method. The method may be applied to the foregoing wireless communication network, to implement communication transmission in a wireless communication system that integrates an NTN network. As shown in FIG. 2, the method includes the following steps.

101: A first access node obtains a first communication resource corresponding to a first terminal device, where the first communication resource is used to provide a network function service for the first terminal device.

The first access node is a network node in a radio access network, for example, a network device having a base station function or a satellite node on which a base station function is deployed. When the first terminal device accesses the wireless communication network or sends a request message to the wireless communication network, the first access node obtains the first communication resource. The first communication resource is applicable to the following various application scenarios.

Scenario 1 relates to a tariff requirement in a resource sharing scenario. For a satellite network system, due to mobility of an access node, a satellite network and a satellite spectrum may be shared by users and operators in different countries and regions. Therefore, a mechanism is required to meet a charging requirement of a user in a resource sharing scenario. In "scenario 1", a scenario in which a user of an operator X needs to lease a spectrum resource and a satellite network resource of an operator Y is considered, where a satellite serves as a resource scheduling node, for example, the first access node in the access network.

When a function service is provided in "scenario 1", the first communication resource includes a resource such as a time domain resource, a frequency domain resource, a code resource, a beam resource, or a polarization resource.

Scenario 2 is a network slice management scenario. Network slicing is to divide a physical network into a plurality of virtual networks and allocate network resources to different users based on parameters such as a network latency, bandwidth, and reliability, to flexibly meet user requirements for network resources in different cases.

When a function service is provided in "scenario 2", the first communication resource includes one or more of an access network slice parameter, a core network slice parameter, and a data network slice parameter.

Scenario 3 relates to a location information-based invoking requirement of a cell user. In this scenario, a satellite node is mainly used to invoke a user in a region to which a cell belongs, especially to perform scheduling based on location information of the user. Before scheduling, the satellite node first divides the region. Usually, a terrestrial region within a specific range is divided into several sub-regions. A range of each sub-region may be represented by using a geographical location. In other words, a coverage area of each sub-region is bound to a geographical location.

When a function service is provided in "scenario 3", the first communication resource includes a precoding matrix, a network parameter for obtaining a modulation and coding scheme (modulation and coding scheme, MCS) or a time-frequency resource, or the like.

The precoding matrix is used to indicate which ports are selected by a satellite node to receive communication data sent by a terminal.

When a user is in different sub-regions, a precoding matrix allocated to a terminal and a network parameter allocated for obtaining an MCS or a time-frequency resource are determined based on a quantity of users in a sub-region in which the user is located, maximum transmission bandwidth supported by a sub-region, and a resource occupation status between a current sub-region and a neighboring sub-region. The network parameter for obtaining the MCS includes an index for obtaining the MCS, a neural network parameter for obtaining the MCS, or the like.

102: The first access node generates a first record based on the first communication resource. The first record includes user information, the first communication resource, and time information.

The user information includes a device identifier and a user identifier of the first terminal device, a location, a home location, and a service level of the first terminal device, and the like. The user information may be reported by the first terminal device to the first access node when the first terminal device accesses a network for the first time, or reported by the first terminal device to the first access node in a process of communicating with the first access node. An implementation of obtaining the user information is not limited in this embodiment.

The time information is used to identify a time point or a time period of generating the first record, for example, a moment t1 at which the first record is generated, or a time period t2 to t3 in which the first record is collected. In addition, the time information may be an indication field used to identify the time information, for example, an identifier ID, or may be a specific time point or time period.

103: The first access node sends the first record to another access node in the wireless communication network.

The another access node in the wireless communication network may include all access nodes other than the first access node in the radio access network, for example, a satellite node 2, a satellite node 3, ..., and a satellite node N.

The first access node may send the first record immediately after generating the first record, or send the first record when a preset cycle arrives. Specifically, a sending manner may be broadcast or unicast. This is not limited in this embodiment.

Optionally, when the first access node sends the first record in a broadcast manner, a broadcast range may be a range covered by maximum transmit power of a transmitter in the first access node, or may be a range covered by broadcast at preset transmit power that does not exceed the maximum transmit power. When the first access node sends the first record in a unicast manner, a receiving object may be a directional satellite node, or may be a plurality of satellite nodes that have communication records with the first terminal device.

In addition, optionally, if the first access node does not have a broadcast sending function, the first access node first sends the first record to a node that has a broadcast or unicast sending function. The node may also be referred to as a forwarding node. After receiving the first record, the forwarding node sends the first record to the another access node in the radio access network.

According to the method provided in this embodiment, a satellite node serves as an access node in a radio access network. After a communication resource required by a user is determined, a record is generated based on the communication resource, and then sent to another access node in the radio access network instead of a core network element of a terrestrial station. Because a distance between the first access node and the another access node in the radio access network is shorter than a distance to the terrestrial core network element, after the first record is sent to the another access node, a service response speed of processing and feedback performed by the another access node is higher, and a transmission latency is reduced. Therefore, this method can effectively reduce a transmission latency and overheads, so that wireless communication efficiency is improved.

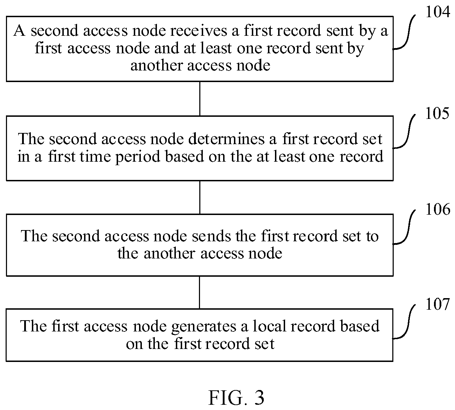

In addition, as shown in FIG. 3, the method further includes the following steps.

104: A second access node receives the first record sent by the first access node, and at least one record sent by another access node. The second access node is one of the other access nodes in the radio access network, for example, the satellite node 2.

The record that is sent by the another access node and that is received by the second access node includes user information, a communication resource, and time information. For example, in addition to receiving a first record sent by the satellite node 1, the satellite node 2 further receives a second record sent by the satellite node 3. The second record includes user information of the first terminal device, a second communication resource, time information, and the like. The second communication resource includes information such as a time domain resource, a frequency domain resource, a code resource, a beam resource, and a polarization resource that are allocated to the first terminal device; or an access network slice parameter, a core network slice parameter, and a data network slice parameter; or a precoding matrix and a network parameter for obtaining an MCS.

Specifically, the second access node collects, in a specific time period such as a first time period, statistics about at least one record obtained by the second access node, where the at least one record includes a record generated by the second access node.

105: The second access node determines a first record set in a first time period based on the at least one record.

The second access node classifies and combines the at least one record obtained in the first time period, and then generates the first record set. Statistics about all communication resources occupied or used by the first terminal device in the first time period are collected in the first record set, and the first record set includes the first record and the record generated by the another access node.

Optionally, before classification and combination, the second access node first verifies validity of each obtained record, performs classification and combination on only a record that is verified to be valid, and may delete a record that is verified to be invalid. A specific manner of verifying whether each record is valid is not limited in this embodiment.

106: The second access node sends the first record set to the another access node.

Specifically, the second access node sends the first record set to the first access node and the another access node. Correspondingly, the first access node and the another access node receive the first record set.

The second access node generates the first record set, broadcasts the first record set to the another node, completes a consensus with the another access node for the first record set, and locally stores the record set after the consensus is reached.

In a possible implementation, a process of propagation and consensus reaching of the record set may be divided for independent completion in a plurality of regions.

For example, based on a quantity of active users in a region or a quantity of newly added records in a unit time, when a quantity of users in a region reaches a preset quantity or a quantity of newly added records reaches a threshold, a consensus mechanism is performed on all records in the region in which the users are located, to complete a consensus operation for a record set in the region.

In another possible implementation, a process of propagation and consensus reaching of the record set may be triggered by a timer. When a trigger instruction from a trigger is received, a consensus between the second access node and the another access node for the record set is started. An occasion for sending the trigger instruction by the trigger may be predefined by a system.

107: The first access node generates a local record based on the first record set.

In a possible implementation, after receiving the first record set sent by the second access node, the first access node makes a consensus for the first record set with the second access node and the another access node by using a practical Byzantine fault tolerance (practical Byzantine fault tolerance, PBFT) algorithm. Optionally, at least one access node in each region uses the first record set as a block, and selects several access nodes to complete a consensus. Once the consensus is reached, each of remaining nodes in the region completes a synchronization operation for the block.

For example, one blockchain platform includes a plurality of independent chains to complete different operations. Each satellite node packages user-related information such as scheduling, authentication, and charging into blocks, and records the blocks on the blockchain platform, to facilitate subsequent data transmission between a radio access network and a core network, and transfer some data in the core network to a block in the radio access network, thereby implementing data exchange and sharing between different access nodes in the radio access network.

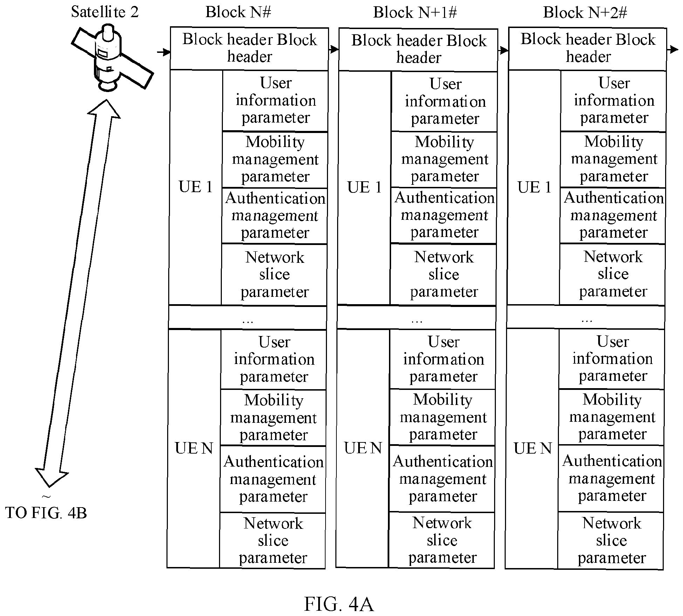

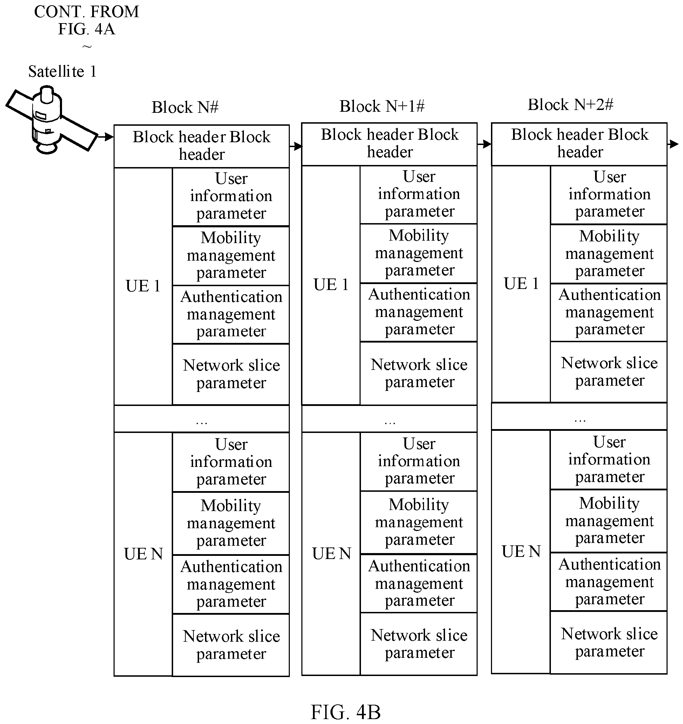

For example, as shown in FIG. 4A and FIG. 4B, a blockchain maintained by a satellite node 1 and a satellite node 2 includes several blocks, each block records a transaction record within a period of time, and the transaction record includes a user information parameter, a mobility management parameter, an authentication management parameter, a network slice parameter, and the like of each user within the period of time. For example, a block N (N# block) indicates a set of transaction records of UE 1 to UE N that are recorded by the satellite node 1 in a first time period; a block N+1 (N+1# block) indicates a set of transaction records of the UE 1 to the UE N that are recorded by the satellite node 1 in a second time period; and a block N+2 (N+2# block) indicates a set of transaction records of the UE 1 to the UE N that are recorded by the satellite node 1 in a third time period. The block N+2 is a block added to the blockchain after the satellite node 1 and the satellite node 2 complete a block consensus, to implement resource sharing between the satellite node 1 and the satellite node 2.

This embodiment provides a decentralized wireless communication method. After a consensus is reached, a record of each user is carried on a sharing platform of nodes. Each node is deployed in a satellite network. Original information transmission between the space and the ground is converted into information transmission between access nodes in the space. In this way, communication data does not need to be returned to a terrestrial node, but a corresponding service function is completed on an access node side in the space, so that a transmission latency is reduced, and signaling overheads are reduced.

The following describes the method in the foregoing embodiment in detail with reference to a specific application scenario in an embodiment.

In this embodiment, an example in which the first terminal device is a terminal 1, the first access node is a satellite node 1, and the second access node is a satellite node 2 is used for description. Both the satellite node 1 and the satellite node 2 belong to a same radio access network, and the radio access network further includes another node, for example, a satellite node N and a forwarding node. It should be noted that satellite nodes belonging to a same radio access network may belong to a same operator, or may belong to different operators. This is not limited in this embodiment.

In addition, access nodes such as the satellite node 1 and the satellite node 2 may have some or all functions of a core network.

A plurality of access nodes in the radio access network, such as the satellite node 1, the satellite node 2, ..., and the satellite node N, form a sharing platform. A resource on the platform can be shared by all access nodes. To ensure security of the shared resource, the resource on the platform is encrypted. For example, each piece of shared data is encrypted by using the foregoing asymmetric encryption mechanism. If any satellite node wants to obtain a shared resource on the platform, the satellite node first needs to decrypt encrypted data.

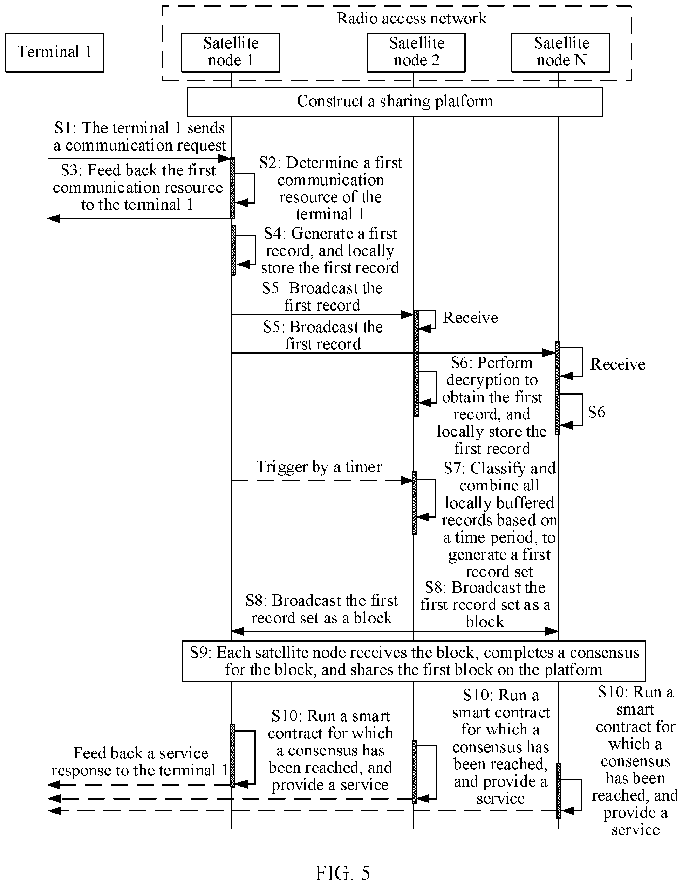

For example, the sharing platform is a blockchain network. As shown in FIG. 5, the satellite node 1 and the satellite node 2 to the satellite node N are located in a same radio access network, and the satellite node 1 obtains a pair of keys before accessing the network, where the keys include a public key and a private key. The public key is uploaded to the blockchain platform after network access, and any blockchain node may obtain the public key from the blockchain platform. In addition, the private key is stored locally. The private key may be used to encrypt a session key and a digital signature, and encrypt to-be-transmitted data. The public key is used to decrypt data encrypted by using the private key or verify a digital signature. After obtaining encrypted data on the blockchain platform, an access node needs to use the public key that matches the private key to perform decryption.

Optionally, the public key and the private key may be generated by using parameters such as a key material, a random number seed, and an encryption algorithm. For access nodes of a same operator and access nodes of different operators, used encryption algorithms may be the same or may be different. If different encryption algorithms are used, different operators need to negotiate with each other in advance. After the negotiation, data on the sharing platform is encrypted based on an agreement between two parties, to improve security of a shared resource.

In addition, the satellite node 1 may alternatively join the blockchain platform after accessing the network. An occasion and a manner of joining the sharing platform by a satellite node are not limited in this embodiment.

In addition, it should be understood that another access node such as another satellite node or a forwarding node that needs to obtain a shared resource and needs to forward data may join the sharing platform. Alternatively, in another implementation, a network server pre-plans that all access nodes belonging to a specific region form a sharing platform.

Optionally, each access node on the sharing platform may include but is not limited to a charging unit, a processing unit, a receiving unit, a sending unit, and the like. In addition, these units may be implemented by using hardware modules, software modules, or software and hardware modules.

After the sharing platform is established, a satellite node joining the sharing platform may perform a wireless communication method shown in FIG. 5. Specifically, the method includes the following steps.

S1: The terminal 1 sends a communication request to the satellite node 1, and correspondingly, the satellite node 1 receives the communication request sent by the terminal 1. The communication request is used to provide a network service for the terminal 1, for example, request to provide a tariff service or request to provide a network resource, or is a resource request based on a location of the terminal 1.

S2: The satellite node 1 determines a first communication resource of the terminal 1 based on the communication request sent by the terminal 1.

Optionally, in the foregoing "scenario 1", the first communication resource determined by the satellite node 1 includes resources such as a time domain resource, a frequency domain resource, a code resource, a beam resource, and a polarization resource that are allocated to the terminal 1.

In the foregoing "scenario 2", the determined first communication resource includes an access network slice parameter, a core network slice parameter, a data network and service slice parameter, and the like.

In the foregoing "scenario 3", the determined first communication resource includes a precoding matrix, a network parameter allocated for obtaining an MCS or a time-frequency resource, and the like.

In a possible implementation, the satellite node 1 further obtains an IP address of the terminal 1. The IP address of the terminal 1 may be carried in the communication request, or may be obtained when the terminal 1 accesses the radio access network for the first time.

S3: The satellite node 1 sends the first communication resource to the terminal 1, and correspondingly, the terminal 1 receives the first communication resource.

Specifically, the satellite node 1 may directly send the first communication resource, or the satellite node 1 first sends the first communication resource to a forwarding node, and then the forwarding node forwards the first communication resource to the terminal 1. The forwarding node may be a node in the radio access network, or may be a node located on the ground. This is not limited in this embodiment.

S4: The satellite node 1 generates a first record based on the first communication resource, and locally stores the first record.

The first record includes user information, the first communication resource, and time information.

The user information may include one or more of the following: the IP address, a device identifier, a user identifier, a user name, a home location, and the like of the terminal 1. The device identifier of the terminal 1 may be a media access control (media access control, MAC) address of the terminal 1, and the user identifier or the user name may be an identity document (Identity document, ID) allocated by the network to a user. In addition, the time information in the first record includes a timestamp at which the first record is generated.

Optionally, in "scenario 1", the first record further includes a charging coefficient of the terminal 1, and the charging coefficient may be determined by parameters such as a user level, a service level, and QoS of the terminal 1. Information such as the user information, the charging coefficient, and the timestamp in the first record may be indicated by using at least one field. For example, the first record includes three fields, where a field 1 indicates the IP address of the terminal 1, a field 2 indicates the charging coefficient of the terminal 1, and a field 3 indicates the timestamp at which the first record is generated.

In "scenario 2", indication fields included in the first record are different based on different functions of the satellite node 1. Specifically, when the satellite node 1 has an access network function, the first record includes a field used to indicate an access network slice parameter. When the satellite node 1 has an access network function and at least some functions of a core network, the first record includes a field used to indicate an access network slice parameter and a core network slice parameter. When the satellite node 1 has an access network function, at least some functions of a core network, and a data network function, the first record includes a field used to indicate an access network slice parameter, a core network slice parameter, and a data network slice parameter.

In "scenario 3", the first record includes a field used to indicate a user identifier, a user name, and a home location of the terminal 1.

S5: The satellite node 1 broadcasts the first record.

Before broadcasting the first record, the satellite node 1 first encrypts the first record to generate a first encrypted ciphertext, and then broadcasts the first encrypted ciphertext to another access node in the radio access network. Correspondingly, the another access node, for example, the satellite node 2 or the satellite node N, receives the first encrypted ciphertext.

Specifically, in a possible implementation, the satellite node 1 may use a secret mechanism of asymmetric encryption, that is, encrypt the first record by using a local private key, to generate the first encrypted ciphertext. Alternatively, in another possible implementation, the first record may be encrypted in an electronic signature manner.

If the satellite node 1 does not have a broadcast function, the satellite node 1 may first send the first encrypted ciphertext to a forwarding node. After receiving the first encrypted ciphertext, the forwarding node broadcasts the first encrypted ciphertext to the another access node in the radio access network. The forwarding node may be determined based on ephemeris information. Optionally, the forwarding node is a node at a high altitude or on a satellite platform.

It should be understood that the forwarding node is not limited to a high-altitude node or a satellite node, but may be a node close to the ground.

This embodiment is described by using an example in which the another node that performs receiving is the satellite node 2, and the foregoing method further includes the following steps.

S6: After receiving the first encrypted ciphertext sent by the satellite node 1, the satellite node 2 decrypts the first encrypted ciphertext to obtain the first record, and locally stores the first record in the satellite node 2.

In a possible implementation, the satellite node 2 obtains a public key from a blockchain platform; decrypts the first encrypted ciphertext by using the public key; and if the decryption succeeds, determines that the first encrypted ciphertext is "true", verifies that the first record is valid, and obtains the first record; or if the decryption fails, determines that the first encrypted ciphertext is "false", and verifies that the first record is invalid.

Optionally, the method further includes: The satellite node 2 discards the invalid first encrypted ciphertext, and may further feed back, to the satellite node 1, an indication indicating that the first record is verified to be invalid.

It should be noted that, in this embodiment, if the satellite node 2 is a node on a sharing platform and is a normal node that has registered with the network, the node can obtain a decryption key. If the node fails to register with the network, that is, the node is an illegal node, the illegal node cannot obtain a decryption key. For a node that does not belong to the sharing platform, although the node can also receive the broadcast first encrypted ciphertext, the node cannot obtain the decryption key on the sharing platform. Therefore, the node cannot correctly decrypt the received first decrypted ciphertext to obtain the first record.

Similarly, another satellite node also performs validity verification on the received first encrypted ciphertext, and then stores a decrypted first record.

S7: The satellite node 2 classifies and combines, based on a transaction timestamp in the first record and a time period, a record locally buffered by the satellite node 2, to generate a first record set.

The record includes records of all terminal devices, and may be classified based on different terminal devices. For example, the record includes all tariff records related to the terminal 1, all network slice resource records belonging to the terminal 1, or a resource record based on a location to which the terminal 1 belongs.

When a timer triggers the satellite node 2, the satellite node 2 classifies and combines, in a timestamp sequence, locally buffered records in a period of time, to obtain the first record set.

For example, in "scenario 1", if the satellite node 2 locally stores three records when being triggered by the timer, the satellite node 2 collects statistics about all tariff records of the terminal 1 in a last hour, for example, a time period from 10:00 to 11:00, as shown in Table 1.

**Table 1: Record set based on a tariff record of the terminal 1**

| Buffered record | Tariff information of the terminal 1 | From which node | Timestamp T |
|---|---|---|---|
| Record 1 | Tariff 1 | Satellite node 1 | T1=10:14 |
| Record 2 | Tariff 2 | Satellite node 2 | T2=10:22 |
| Record 3 | Tariff 3 | Satellite node 3 | 13=10:56 |

After the records 1 to 3 in the first time period (10:00 to 11:00) are combined, an obtained first record set includes {tariff 1, tariff 2, tariff 3, T 1, T2, T3}.

For "scenario 2", the satellite node 2 classifies and combines information such as all access network slice parameters, at least some core network slice parameters, and data network slice parameters that are related to the terminal 1 in the first time period, as shown in Table 2.

**Table 2: Record set based on a network slice parameter of the terminal 1**

| Buffered record related to the terminal 1 | Access network slice parameter | At least some core network slice parameters | Data network slice parameter | From which node | Timestamp T |
|---|---|---|---|---|---|
| Record 1 | Random access parameter 1, frame structure parameter 1 | Security parameter 1, bearer parameter 1 | Forwarding path parameter 1 | Satellite node 1 | T1 |
| Record 2 | Random access parameter 2, frame structure parameter 2 | Security parameter 2, bearer parameter 2 | Forwarding path parameter 2 | Satellite node 2 | T2 |
| ... | ... | ... | ... | ... | ... |
| Record n | Random access parameter n, frame structure parameter n | Security parameter n, bearer parameter n | Forwarding path parameter n | Satellite node N | T3 |

After all the buffered records 1 to n that are related to the terminal 1 in the first time period are combined, an obtained first record set is f random access parameters 1 to n, frame structure parameters 1 to n, security parameters 1 to n, bearer parameters 1 to n, forwarding path parameters 1 to n, T1 to Tn}.

It should be noted that one or more of the access network slice parameter, the at least some core network slice parameters, and the data network slice parameter may be included, or another network slice parameter may be included. Types and specific parameter content of these parameters are not limited in this embodiment.

For " scenario 3", the satellite node 2 classifies and combines user location information of the terminal 1 to the terminal n in the first time period, as shown in Table 3.

**Table 3: Record set based on a location of a user and a region to which the user belongs**

| Buffered record | Locations of the terminal 1 to the terminal n | Region | From which node | Timestamp |
|---|---|---|---|---|
| Record 1 | The terminal 1 is located at an address 1 | Belonging to a region 1 | Satellite node 1 | T1 |
| Record 2 | The terminal 2 is located at an address 2 | Belonging to a region 2 | Satellite node 2 | T2 |
| Record 3 | The terminal n is located at an address 3 | Belonging to a region 1 | Satellite node N | T3 |
| ... | ... | ... | ... | ... |

After the records 1 to 3 in the first time period are combined, an obtained first record set is {addresses corresponding to the terminal 1 to the terminal n, regions 1 and 2 to which the addresses belong, T 1 to T3}.

It should be understood that, the first record set may further include some or all content in Table 1 to Table 3, or may further include more or less other content, an identifier of the terminal, and the like. This is not limited in this embodiment.

S8: The satellite node 2 uses the first record set as a block, for example, a first block, and broadcasts the first block to another access node in the radio access network.

The satellite node 2 may directly broadcast the first block, or forward the first block by using an access node.

For example, on a blockchain platform, blockchain nodes may be classified into a receiving node and a forwarding node based on functions performed by the blockchain nodes. The receiving node is responsible for performing blockchain maintenance and an update-related operation, and the forwarding node is responsible for spreading a received transaction record and a generated block to a remote blockchain node. In this embodiment, the satellite node 2 may be a receiving node or a forwarding node, or may have functions of both a receiving node and a forwarding node.

S9: Each satellite node receives the first block, completes a consensus for the first block with the satellite node 2, and shares the first block on the platform.

For example, the satellite node that performs receiving may make the consensus for the first block by using a consensus algorithm such as a PBFT algorithm. A block propagation/consensus process may be divided for independent implementation in a plurality of regions. Specifically, in each consensus region, at least one receiving node generates a block, and selects several receiving nodes to complete a consensus. Once the satellite node 2 reaches a consensus with the satellite node 1 and another satellite node, each of remaining nodes (the satellite node 1 to the satellite node N) in the region completes a synchronization operation for the block.

Optionally, for the blockchain platform, after the consensus for the first block is completed, the first block is persistent on a blockchain, so that each node on the blockchain platform can obtain the first block.

S10: Any satellite node on the sharing platform runs a smart contract for which a consensus has been reached, and provides a service.

In a possible implementation, a satellite node on the sharing platform collects statistics about and obtains tariff information of the terminal 1 in real time, and provides the tariff information for an operator to which the terminal 1 belongs. For example, in the foregoing "scenario 1", after the satellite node 1 and the satellite node 2 complete a consensus for the tariff information of the terminal 1, the satellite node 1 obtains tariff information of the terminal 1 in a specific time period based on a running smart contract, and then provides the tariff information for the operator to which the terminal 1 belongs, to help provide a tariff service for a user.

In this implementation, a charging function for a user is completed in real time by sharing resources between nodes on the sharing platform, thereby resolving a charging problem in a scenario of sharing a resource such as a spectrum or satellite hardware. In addition, original charging information transmission is changed to information transmission between satellite nodes in space, and there is no need to return to a terrestrial node, so that a transmission latency is reduced, and signaling overheads are reduced.

In another possible implementation, a satellite node in the radio access network, for example, the satellite node 2, receives a service request sent by the terminal 1, runs a smart contract based on the service request, and feeds back a service response to the terminal 1.

For example, in "scenario 2", when the terminal 1 sends a service request to the radio access network, and the service request is a data transmission service request, a satellite node that performs receiving runs a smart contract based on user information of the terminal 1 to query a network slice resource that can be provided for the terminal 1. For example, a random access parameter and a frame structure parameter of the terminal 1 are determined based on Table 2, then transmission bandwidth that can be provided for the terminal 1 is determined based on these parameters, and service data is transmitted based on the determined transmission bandwidth. In this way, a data transmission service is provided for the terminal 1.

In this implementation, when a terminal accesses a non-home operator network, a satellite node may complete orchestration of a user network slice based on data on the sharing platform, and deliver, to the terminal, an orchestrated slice resource that belongs to the terminal, so that update and transmission of the network slice resource do not require a return to a terrestrial node, and are completed between satellites, so that signaling overheads are reduced, and a latency is reduced.

In another possible implementation, in "scenario 3", when the terminal 1 is located in a specific region or a specific location, a satellite node may determine, based on information about the region or the location in which the terminal 1 is located currently, a precoding matrix of the terminal 1, a network parameter for obtaining an MCS, and the like, and then allocate an air interface resource such as a time-frequency resource and a modulation and coding parameter of the terminal 1 based on the precoding matrix and/or the network parameter for the MCS, to complete resource scheduling for the terminal 1. The information about the region or the location in which the terminal 1 is located currently may be represented by the IP address, the home location, or the like of the terminal 1.

In this implementation, the satellite node may complete air interface resource configuration for users in different regions or locations based on data on the sharing platform, to coordinate all resources and implement efficient resource utilization. In addition, signaling overheads can be reduced, and a transmission latency can be reduced.

The following describes apparatus embodiments corresponding to the foregoing method embodiments.

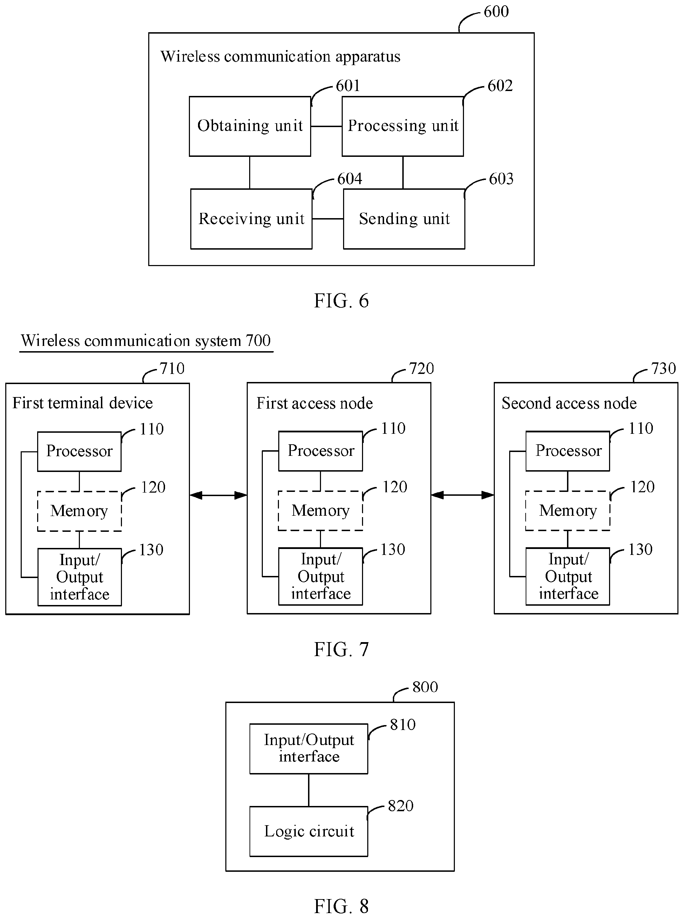

FIG. 6 is a schematic diagram of a structure of a wireless communication apparatus according to an embodiment of this application. The apparatus may be an access node, for example, a first access node, or a component located in the first access node, for example, a chip or a chip system. In addition, the apparatus may implement the wireless communication method in the foregoing embodiments.

Specifically, as shown in FIG. 6, the apparatus 600 may include an obtaining unit 601, a processing unit 602, a sending unit 603, and a receiving unit 604. In addition, the apparatus 600 may further include other units or modules such as a storage unit, a charging unit, or a blockchain unit.

The obtaining unit 601 is configured to obtain a first communication resource corresponding to a first terminal device, where the first communication resource is used to provide a network function service for the first terminal device. The processing unit 602 is configured to generate a first record based on the first communication resource. The sending unit 603 is configured to send the first record to another access node in a wireless communication network.

Optionally, in a specific implementation, the another access node in the wireless communication network includes a second access node, and the receiving unit 604 is configured to receive a first record set sent by the second access node, where the first record set is generated based on the first record and a record of the another access node. The processing unit 602 is further configured to generate a local record based on the first record set.

The first record includes user information, the first communication resource, time information, and the like. Further, the first communication resource includes at least one of the following: a time domain resource, a frequency domain resource, a code resource, a beam resource, and a polarization resource; an access network slice parameter, a core network slice parameter, and a data network slice parameter; and a precoding matrix, a network parameter for obtaining a modulation and coding scheme MCS, and the like.

Optionally, in another specific implementation, the processing unit 602 is specifically configured to encrypt the first record, and the sending unit 603 is specifically configured to send an encrypted first record to the second access node and the another access node.

In addition, the apparatus may alternatively be used as the second access node in the foregoing embodiments, for example, the satellite node 2. A structure of the second access node may be the same as a structure of the first access node.

As shown in FIG. 6, in this case, the receiving unit 604 is configured to receive at least one record sent by another access node, where the at least one record includes a first record sent by a first access node, the first record is generated based on a first communication resource, and the first communication resource is used to provide a network function service for a first terminal device; the processing unit 602 is configured to determine a first record set in a first time period based on the at least one record; and the sending unit 603 is configured to send the first record set to the another access node.

The first record includes user information, the first communication resource, and time information. The first communication resource includes any one of the following: a time domain resource, a frequency domain resource, a code resource, a beam resource, and a polarization resource; an access network slice parameter, a core network slice parameter, and a data network slice parameter; and a precoding matrix, a network parameter for obtaining a modulation and coding scheme MCS, and the like.

Optionally, in a specific implementation, the at least one record includes an encrypted first record; and the processing unit 602 is further configured to decrypt the encrypted first record and a record encrypted by the another access node; and determine the first record set based on a decrypted first record and a decrypted record of the another access node.

Optionally, in another specific implementation, the receiving unit 604 is further configured to receive the at least one record from the another access node that is forwarded by a third node, where the third node is a node having a unicast or broadcast function in a wireless communication network.

In addition, in a hardware implementation, an embodiment of this application further provides a communication device. The communication device may be any one of the first terminal device, the first access node, and the second access node in the foregoing embodiments. In addition, the communication device may alternatively be a network element device in a core network, such as a UPF, an AMF, or an SMF.

FIG. 7 is a schematic diagram of a structure of the communication device. The communication device may include a processor 110, a memory 120, and at least one input/output interface 130. The processor 110, the memory 120, and the at least one input/output interface 130 are coupled by using a communication bus.

The processor 110 is a control center of the communication device, and may be configured to complete communication in a wireless communication system, including message transmission between an access node and a terrestrial terminal device, communication transmission between access nodes, communication transmission between an access node and a core network element, and the like.

The processor 110 may include an integrated circuit (Integrated Circuit, IC), for example, may include a single packaged IC, or may include a plurality of connected packaged ICs that have a same function or different functions. For example, the processor 110 may include a central processing unit (central processing unit, CPU), a digital signal processor (digital signal processor, DSP), or the like.

In addition, the processor 110 may further include a hardware chip, and the hardware chip may be a logic circuit, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 120 is configured to store and exchange various types of data or software, including a request message, a first communication resource, user information, time information, and the like. In addition, the memory 120 may store a computer program or code.

Specifically, the memory 120 may include a volatile memory (volatile memory), for example, a random access memory (random access memory, RAM); or may include a non-volatile memory (non-volatile memory), for example, a flash memory (flash memory), a hard disk drive (hard disk drive, HDD), or a solid-state drive (Solid-State Drive, SSD). The memory 120 may alternatively include a combination of the foregoing types of memories.

Optionally, the memory 120 may be used as a storage medium and integrated into the processor 110, or may be configured outside the processor 110. This is not limited in this embodiment.

The input/output interface 130 is any apparatus such as a transceiver, and is configured to communicate with another device or a communication network, for example, an Ethernet, a RAN, or a WLAN. For example, when the input/output interface 130 is an Xn interface, the first access node communicates with the second access node by using the Xn interface; or when the input/output interface 130 is an NG interface, the first access node communicates with a terrestrial station by using the NG interface.

In addition, the communication device further includes a mobile communication module, a wireless communication module, and the like. The mobile communication module includes a module with a wireless communication function. In addition, the communication device may further include a filter, a switch, a power amplifier, a low noise amplifier (low noise amplifier, LNA), and the like. In some embodiments, at least some function modules of the mobile communication module may be disposed in the processor. The wireless communication module may provide a wireless communication solution that is applied to a switch and includes a WLAN, Bluetooth (Bluetooth, BT), a global navigation satellite system (global navigation satellite system, GNSS), or the like.

It should be understood that the communication device may further include more or fewer other components, and the structure shown in this embodiment of this application does not constitute a specific limitation on the communication device. In addition, the components shown in FIG. 6 or FIG. 7 may be implemented by using hardware, software, firmware, or any combination thereof.

When software is used to implement the components, all or some of the components may be implemented in a form of a computer program product. For example, the sending unit 603 and the receiving unit 604 in the record management apparatus shown in FIG. 6 may be implemented by using the input/output interface 130. Functions of the obtaining unit 601 and the processing unit 602 may be implemented by the processor 110, and a function of the storage unit may be implemented by the memory 120.

In addition, an embodiment of this application further provides a wireless communication system 700. As shown in FIG. 7, the system includes at least one terminal device such as a first terminal device 710, a radio access network, and a core network. The radio access network includes at least a first access node 20 and a second access node 730. In addition, structures of these devices may be the same as or different from the structure shown in FIG. 7.

The first access node 720 is configured to obtain a first communication resource corresponding to the first terminal device 710, generate a first record based on the first communication resource, and send the first record to the second access node 730 and another access node, where the first communication resource is used to provide a network function service for the first terminal device 710.

The second access node 730 is configured to receive the first record and a record sent by the another access node, determine a first record set in a first time period based on the first record and the record sent by the another access node, and send the first record set to the first access node 720 and the another access node.

In addition, the first access node 720 is further configured to receive the first record set, and generate a local record based on the first record set.

Optionally, in a specific implementation, the first access node 720 is further configured to encrypt the first record, and send an encrypted first record to the second access node 730 and the another access node. The second access node 730 is further configured to decrypt the encrypted first record and a record encrypted by the another access node; and determine the first record set based on a decrypted first record and a decrypted record of the another access node.

Optionally, in another specific implementation, the first access node 720 is further configured to determine a first communication resource when the first terminal device 710 accesses a network or determine a first communication resource based on a request of the first terminal device 710, and send the first communication resource to the first terminal device 710.

In addition, the first terminal device 710 is further configured to send a first service request to the first access node 720. When receiving the first service request, the first access node 720 generates a first service response based on the local record, and sends the first service response to the first terminal device 710. The first terminal device 710 is further configured to receive the first service response.

According to the system provided in this embodiment, a network resource is managed based on a distributed mechanism and a consensus, and some functions of a core network are transferred to a radio access network, so that original signaling exchange between the radio access network and the core network is completed by using an access node in the radio access network, thereby reducing signaling overheads and a related latency.

In addition, the method uses the consensus mechanism and distributed mechanism on the sharing platform to achieve design effect of communication network decentralization, and meet a requirement of anonymization for the core network.

An embodiment of this application further provides a computer program product. The computer program product includes one or more computer program instructions. When a computer loads and executes the computer program instructions, the procedures or functions according to the foregoing embodiments are all or partially generated. The computer may be a general-purpose computer, a dedicated computer, a computer network, or other programmable apparatuses.

The computer program instructions may be stored in a computer-readable storage medium or may be transmitted from a computer-readable storage medium to another computer-readable storage medium. For example, the computer instructions may be transmitted from a network node, computer, server, or data center to another node in a wired or wireless manner.

Optionally, in another possible implementation of the wireless communication apparatus, as shown in FIG. 8, an apparatus 800 may be a wireless communication apparatus or a chip in the wireless communication apparatus. Specifically, the apparatus 800 includes at least one input/output interface 810 and a logic circuit 820. The input/output interface 810 may be an input/output circuit. The logic circuit 820 may be a signal processor, a chip, or another integrated circuit that can implement the method in this application.

The at least one input/output interface 810 is configured to input or output a signal or data. For example, when the apparatus is a first access node or a satellite node, the input/output interface 810 is configured to obtain a first communication resource corresponding to a first terminal device; and the input/output interface 810 may be further configured to output a first record. In addition, when the apparatus is a first access node or a satellite node, the input/output interface 810 is further configured to send the first record to another access node in the wireless communication network.

In addition, the input/output interface 810 may be further configured to implement communication transmission with other nodes in a radio access network and a terrestrial core network.

The logic circuit 820 is configured to perform some or all steps of any method provided in embodiments of this application. The logic circuit may implement functions implemented by the processor 110 in the wireless communication system 700, and the obtaining unit 601 and the processing unit 602 in the wireless communication apparatus 600. Functions of the input/output interface 130 in the wireless communication system 700 and the sending unit 603 and the receiving unit 604 in the wireless communication apparatus 600 may be implemented by the input/output interface 810 in the apparatus 800.

When the wireless communication apparatus is a chip used in a terminal, the terminal chip implements a function of the terminal in the foregoing method embodiments. For example, the terminal chip receives, from a first access node by using the input/output interface 810, a first communication resource corresponding to a terminal device, and obtains, from the first access node, a first service response corresponding to a first service request.

In addition, in the descriptions of embodiments of this application, " a plurality of" means two or more, unless otherwise specified. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference.

The foregoing embodiments of this application are not intended to limit the protection scope of this application.

## Claims

1. A wireless communication method, applied to a wireless communication network, wherein the wireless communication network comprises at least two access nodes, and the method comprises:
obtaining, by a first access node, a first communication resource corresponding to a first terminal device, wherein the first communication resource is used to provide a network function service for the first terminal device;
generating, by the first access node, a first record based on the first communication resource; and
sending, by the first access node, the first record to another access node in the wireless communication network.

2. The method according to claim 1, wherein the first record comprises user information, the first communication resource, and time information.

3. The method according to claim 1 or 2, wherein the another access node in the wireless communication network comprises a second access node, and the method further comprises:
receiving, by the first access node, a first record set sent by the second access node, wherein the first record set is generated based on the first record and a record of the another access node; and
generating, by the first access node, a local record based on the first record set.

4. The method according to any one of claims 1 to 3, wherein the first communication resource comprises at least one of the following:
a time domain resource, a frequency domain resource, a code resource, a beam resource, and a polarization resource;
an access network slice parameter, a core network slice parameter, and a data network slice parameter; and
a precoding matrix, and a network parameter for obtaining a modulation and coding scheme MCS.

5. The method according to claim 3, wherein the first communication resource comprises at least one of a time domain resource, a frequency domain resource, a code resource, a beam resource, and a polarization resource; and
the first record is used by an access node in the wireless communication network to charge a user accessing the wireless communication network.

6. The method according to claim 3, wherein the first communication resource comprises at least one of an access network slice parameter, a core network slice parameter, and a data network slice parameter; and
the first record is used by an access node in the wireless communication network to allocate a slice resource to a terminal device accessing the wireless communication network.

7. The method according to claim 3, wherein the first communication resource comprises a precoding matrix and/or a network parameter for obtaining an MCS; and
the first record is used by an access node in the wireless communication network to allocate at least one of a time-frequency resource and a modulation and coding parameter to a terminal device accessing the wireless communication network.

8. The method according to any one of claims 1 to 7, wherein the sending, by the first access node, the first record to another access node in the wireless communication network comprises:
encrypting, by the first access node, the first record, and sending an encrypted first record to the another access node in the wireless communication network.

9. A wireless communication method, applied to a wireless communication network, wherein the wireless communication network comprises at least two access nodes, and the method comprises:
receiving, by a second access node, at least one record sent by another access node in the wireless communication network, wherein the at least one record comprises a first record sent by a first access node, the first record is generated based on a first communication resource, and the first communication resource is used to provide a network function service for a first terminal device; and
determining, by the second access node, a first record set in a first time period based on the at least one record.

10. The method according to claim 9, further comprising:
sending, by the second access node, the first record set to the first access node and the another access node.

11. The method according to claim 9 or 10, wherein the first record comprises user information, the first communication resource, and time information.

12. The method according to any one of claims 9 to 11, wherein the first communication resource comprises at least one of the following:
a time domain resource, a frequency domain resource, a code resource, a beam resource, and a polarization resource;
an access network slice parameter, a core network slice parameter, and a data network slice parameter; and
a precoding matrix, and a network parameter for obtaining a modulation and coding scheme MCS.

13. The method according to claim 12, wherein the first communication resource comprises at least one of the time domain resource, the frequency domain resource, the code resource, the beam resource, and the polarization resource; and
the first record is used by an access node in the wireless communication network to charge a user accessing the wireless communication network.

14. The method according to claim 12, wherein the first communication resource comprises at least one of the access network slice parameter, the core network slice parameter, and the data network slice parameter; and
the first record is used by an access node in the wireless communication network to allocate a slice resource to a terminal device accessing the wireless communication network.

15. The method according to claim 12, wherein the first communication resource comprises the precoding matrix and/or the network parameter for obtaining the MCS; and
the first record is used by an access node in the wireless communication network to allocate at least one of a time-frequency resource and a modulation and coding parameter to a terminal device accessing the wireless communication network.

16. The method according to any one of claims 9 to 15, wherein the at least one record comprises an encrypted first record; and
the determining, by the second access node, a first record set in a first time period based on the at least one record comprises:
decrypting, by the second access node, the encrypted first record and a record encrypted by the another access node; and
determining, by the second access node, the first record set based on a decrypted first record and a decrypted record of the another access node.

17. The method according to any one of claims 9 to 16, wherein the receiving, by a second access node, at least one record sent by another access node comprises:
receiving, by the second access node, the at least one record from the another access node that is forwarded by a third node, wherein the third node is a node in the wireless communication network.

18. A wireless communication apparatus, wherein the apparatus is a first access node in a wireless communication network, the wireless communication network further comprises another access node, and the apparatus comprises:
an obtaining unit, configured to obtain a first communication resource corresponding to a first terminal device, wherein the first communication resource is used to provide a network function service for the first terminal device;
a processing unit, configured to generate a first record based on the first communication resource; and
a sending unit, configured to send the first record to the another access node in the wireless communication network.

19. The apparatus according to claim 18, wherein the first record comprises user information, the first communication resource, and time information.

20. The apparatus according to claim 18 or 19, wherein the another access node in the wireless communication network comprises a second access node, and the apparatus further comprises:
a receiving unit, configured to receive a first record set sent by the second access node, wherein the first record set is generated based on the first record and a record of the another access node; and
the processing unit is further configured to generate a local record based on the first record set.

21. The apparatus according to any one of claims 18 to 20, wherein the first communication resource comprises at least one of the following:
a time domain resource, a frequency domain resource, a code resource, a beam resource, and a polarization resource;
an access network slice parameter, a core network slice parameter, and a data network slice parameter; and
a precoding matrix, and a network parameter for obtaining a modulation and coding scheme MCS.

22. The apparatus according to claim 21, wherein the first communication resource comprises at least one of the time domain resource, the frequency domain resource, the code resource, the beam resource, and the polarization resource; and
the first record is used by an access node in the wireless communication network to charge a user accessing the wireless communication network.

23. The apparatus according to claim 21, wherein the first communication resource comprises at least one of the access network slice parameter, the core network slice parameter, and the data network slice parameter; and
the first record is used by an access node in the wireless communication network to allocate a slice resource to a terminal device accessing the wireless communication network.

24. The apparatus according to claim 21, wherein the first communication resource comprises the precoding matrix and/or the network parameter for obtaining the MCS; and
the first record is used by an access node in the wireless communication network to allocate at least one of a time-frequency resource and a modulation and coding parameter to a terminal device accessing the wireless communication network.

25. The apparatus according to any one of claims 18 to 24, wherein
the processing unit is specifically configured to encrypt the first record; and
the sending unit is specifically configured to send an encrypted first record to the second access node and the another access node.

26. A wireless communication apparatus, wherein the apparatus is a second access node in a wireless communication network, the wireless communication network further comprises another access node, and the apparatus comprises:
a receiving unit, configured to receive at least one record sent by the another access node, wherein the at least one record comprises a first record sent by a first access node, the first record is generated based on a first communication resource, and the first communication resource is used to provide a network function service for a first terminal device; and
a processing unit, configured to determine a first record set in a first time period based on the at least one record.

27. The apparatus according to claim 26, further comprising:
a sending unit, configured to send the first record set to the first access node and the another access node.

28. The apparatus according to claim 27, wherein the first record comprises user information, the first communication resource, and time information.

29. The apparatus according to claim 28, wherein the first communication resource comprises at least one of the following:
a time domain resource, a frequency domain resource, a code resource, a beam resource, and a polarization resource;
an access network slice parameter, a core network slice parameter, and a data network slice parameter; and
a precoding matrix, and a network parameter for obtaining a modulation and coding scheme MCS.

30. The apparatus according to any one of claims 26 to 29, wherein the at least one record comprises an encrypted first record; and
the processing unit is further configured to decrypt the encrypted first record and a record encrypted by the another access node; and determine the first record set based on a decrypted first record and a decrypted record of the another access node.

31. The apparatus according to any one of claims 26 to 30, wherein
the receiving unit is further configured to receive the at least one record from the another access node that is forwarded by a third node, wherein the third node is a node in the wireless communication network.

32. A wireless communication system, wherein the system comprises a first access node, a second access node, and another access node, wherein
the first access node is configured to obtain a first communication resource corresponding to a first terminal device, generate a first record based on the first communication resource, and send the first record to the second access node and the another access node, wherein the first communication resource is used to provide a network function service for the first terminal device; and
the second access node is configured to receive the first record and a record sent by the another access node, and determine a first record set in a first time period based on the first record and the record sent by the another access node.

33. The system according to claim 32, wherein
the second access node is further configured to send the first record set to the first access node and the another access node.

34. The system according to claim 33, wherein
the first access node is further configured to receive the first record set and a record that is from the another access node, and generate a local record based on the first record set and the record of the another access node.

35. The system according to any one of claims 32 to 34, wherein when the first record is a first record encrypted by the first access node, the second access node is further configured to:
decrypt the encrypted first record; and
determine the first record set based on a decrypted first record and the record of the another access node.

36. The system according to claim 34, wherein the system further comprises the first terminal device;
the first terminal device is configured to send a first service request to any access node in the system after the local record is generated;
an access node receiving the first service request is configured to obtain, based on a local record, a first service response corresponding to the first request service, and send the first service response to the first terminal device; and
the first terminal device is further configured to receive the first service response.

37. A network node, wherein the network node is an access node in a wireless communication network, and the network node comprises a processor and a memory, wherein
the memory is configured to store computer program instructions; and
the processor is configured to execute the instructions stored in the memory, so that the network device performs the method according to any one of claims 1 to 17.

38. A computer-readable storage medium, wherein the computer-readable storage medium stores computer program instructions; and
when the computer program instructions are run on a computer,
the method according to any one of claims 1 to 8 is performed, or
the method according to any one of claims 9 to 17 is performed.

39. A computer program product comprising instructions, wherein when the computer program product runs on a computer, the method according to any one of claims 1 to 8 is performed, or the method according to any one of claims 9 to 17 is performed.

40. A computer program, wherein when the computer program is run on a computer, the method according to any one of claims 1 to 8 is performed, or the method according to any one of claims 9 to 17 is performed.

41. A communication system, comprising the communication apparatus according to any one of claims 18 to 25 and the communication apparatus according to any one of claims 26 to 31.
